# EUROPÄISCHE PATENTSCHRIFT

(11) **EP 0 627 881 B1**
(45) Veröffentlichungstag und Bekanntmachung des Hinweises auf die Patenterteilung: **13.08.1997**
(21) Anmeldenummer: 93905273.4
(22) Anmeldetag: 24.02.1993
(51) Int. Cl.: A01N 37/06, A01N 37/02

(54) **INSEKTENABWEHRMITTEL**
INSECT REPELLENT
INSECTIFUGE

(30) Priorität: 27.02.1992 DE 4206090
(43) Veröffentlichungstag der Anmeldung: 14.12.1994
(73) Patentinhaber: PERYCUT-CHEMIE A.G., 8053 Zürich (CH); BENCSITS, Franz, 8053 Zürich (CH)
(72) Erfinder: BENCSITS, Franz, CH-8053 Zürich (CH)
(74) Vertreter: Grünecker, Kinkeldey, Stockmair & Schwanhäusser Anwaltssozietät
(86) Internationale Anmeldenummer: EP9300427
(87) Internationale Veröffentlichungsnummer: WO9316594

(56) Entgegenhaltungen:
- EP-A- 0 392 806
- WO-A-92/02138
- DE-A- 4 012 224
- FR-A- 2 377 154
- US-A- 2 254 665
- US-A- 2 396 012
- US-A- 5 109 022
- CHEMICAL ABSTRACTS, Bd. 82, Nr. 19, Columbus, Ohio, US, Zusammenfassung 120105c
- DATABASE WPIL Week 8315, Derwent Publications Ltd., London, GB; AN 83-36014K (15)
- DATABASE WPIL Week 8315, Derwent Publications Ltd., London, GB; AN 83-36013K (15)
- DATABASE WPI Week 7526, Derwent Publications Ltd., London, GB; AN 75-43302W (26)
- SOAP PERFUMERY AND COSMETICS Bd. 49, Nr. 2, Februar 1976, LONDON GB Seite 43, "Topical insect repellents"

## Beschreibung

Die vorliegende Erfindung betrifft ein Insektenabwehrmittel (Repellent) gegen fliegende, stechende und saugende Insekten.

Repellentien sind chemische Substanzen, die auf Insekten abstoßend wirken. Große praktische Bedeutung hat ihre Anwendung in der Human- und Veterinärhygiene, wo sie Mensch und Tier vor Befall mit blutsaugenden, beißenden oder sonst lästigen Insekten schützen. Bei unmittelbar auf die Haut aufzutragenden Repellentien ist es erforderlich, daß sie hautverträglich, ungiftig, schweiß- und lichtecht und in kosmetischer Hinsicht einwandfrei sind. Außerdem soll der Schutz der behandelten Hautpartien möglichst lange Zeit anhalten und die Wirkungsbreite der Repellentien möglichst groß sein, d.h. sie sollten gegen möglichst viele schädliche oder lästige Insekten wirken.

In der Vergangenheit wurden ätherische Öle, wie Citronellöl, Campher und Eukalyptusöl, als Repellentien eingesetzt; wegen ihrer Nachteile wurden sie jedoch überwiegend durch synthetische Repellentien ersetzt. Synthetische, im Stand der Technik angewandte Repellentien sind z.B. Phthalsäuredimethylester, 1,2-Ethylhexan-1,3-diol, 3,4-Dihydro-2,2-dimethyl-4-oxo-2H-pyran-6-carbonsäure-n-butylester, Bernsteinsäuredipropylester, N,N-Diethyl-3-methyl-benzoesäureamid und Pyridin-2,5-dicarbonsäure-di-n-propylester (Ullmanns Encyklopädie der technischen Chemie, 4. Auflage, Bd. 13, S. 237 ff., 1977). Häufig sind solche synthetischen Repellentien jedoch nicht schweißbeständig und reizen die Schleimhäute. Es ist bei jedem synthetischen Repellent zunächst die Hautverträglichkeit und in jüngster Zeit auch die biologische Abbaubarkeit zu prüfen.

Demgemäß liegt der vorliegenden Erfindung die Aufgabe zugrunde, ein wirksames Insektenabwehrmittel für den Auftrag auf die Haut auf Basis natürlicher und naturidentischer Rohstoffe mit geringstem toxikologischen Risiko zur Verfügung zu stellen, das außerdem über einen langen Zeitraum eine hohe Wirksamkeit entfaltet.

Diese Aufgabe wird erfindungsgemäß durch ein Insektenabwehrmittel gelöst, das als Wirkstoff mindestens einen Fettsäurealkylester mit 1 bis 4 Kohlenstoffatomen in der Alkylgruppe und mindestens einen natürlichen, naturidentischen oder synthetischen Fettalkohol und als Träger mindestens ein natürliches oder naturidentisches pflanzliches oder tierisches fettes Öl enthält.

Ferner betrifft die vorliegende Erfindung die Verwendung des erfindungsgemäßen Insektenabwehrmittels zur Abwehr von fliegenden, stechenden und saugenden Insekten bei Menschen und Tieren.

Beispiele für die in dem erfindungsgemäßen Insektenabwehrmittel verwendeten Fettsäurealkylester mit 1 bis 4 Kohlenstoffatomen in der Alkylgruppe sind Methyl-, Ethyl- oder Butylester von Fettsäuren aus natürlichen oder naturidentischen pflanzlichen oder tierischen fetten Ölen aus der Gruppe Rapsöl, Sonnenblumenöl, Erdnußöl/-butter, Sojaöl, Distelöl, Cupheaöl, Kokosöl, Palmkernöl, Palmöl und Fischtran. Dabei werden Fettsäuren mit 5 bis 19 Kohlenstoffatomen bevorzugt.

Dem verwendeten Fettsäurealkylester ist als weiterer erfindungsgemäßer Wirkstoff ein natürlicher, naturidentischer oder synthetischer Fettalkohol beigemischt, der vorzugsweise 5 bis 18 Kohlenstoffatome aufweist, gesättigt ist oder 1 bis 3 ungesättigte Bindungen pro Molekül aufweist. Die natürlichen Fettalkohole werden beispielsweise aus pflanzlichen und/oder tierischen Ölen und/oder den daraus erhältlichen Fettsäuren und/oder Fettsäurealkylestern erhalten. Die naturidentischen und/oder synthetischen Fettalkohole sind beispielsweise aus Paraffin und/oder Ethen erhältlich. Eine bevorzugte Wirkstoffkombination des erfindungsgemäßen Insektenabwehrmittels enthält 1 bis 99 Gew.-% des Fettsäurealkylesters und 99 bis 1 Gew.-% Fettalkohol.

In weiteren bevorzugten Ausführungsformen enthält das erfindungsgemäße Insektenabwehrmittel 70 bis 98 Gew.-% Fettsäurealkylester und 30 bis 2 Gew.-% Fettalkohol, 30 bis 2 Gew.-% Fettsäurealkylester und 70 bis 98 Gew.-% Fettalkohol, 60 bis 97 Gew.-% Fettsäurealkylester und 40 bis 3 Gew.-% Fettalkohol oder auch 40 bis 3 Gew.-% Fettsäurealkylester und 60 bis 97 Gew.-% Fettalkohol.

Um die Verdunstung der Wirksubstanz(en) zu verlangsamen, und dadurch die Wirkung über einen besonders langen Zeitraum zu erzielen, wird dem erfindungsgemäßen Insektenabwehrmittel mindestens ein Träger aus der Gruppe, bestehend aus natürlichen oder naturidentischen pflanzlichen oder tierischen fetten Ölen, zugesetzt. Beispiele für die erfindungsgemäß verwendeten natürlichen oder naturidentischen pflanzlichen oder tierischen fetten Öle sind Rapsöl, Sonnenblumenöl, Erdnußöl/-butter, Sojaöl, Distelöl, Cupheaöl, Kokosöl, Palmkernöl, Palmöl und Fischtran.

Weiterhin kann in dem erfindungsgemäßen Insektenabwehrmittel als zusätzlicher Träger mindestens eine freie Fettsäure enthalten sein. Diese werden beispielsweise durch hydrolytische Spaltung von natürlichen oder naturidentischen pflanzlichen und/oder tierischen Ölen gewonnen und weisen vorzugsweise 5 bis 19 Kohlenstoffatome in der Kette auf. Beispiele sind Valerian-, Capron-, Önanth-, Capryl-, Pelargon-, Caprin-, Undecan-, Laurin-, Tridecan-, Myristin-, Pentadecan-, Palmitin-, Margarin-, Stearin- und Nonadecansäure, sowie Isovalerian-, Palmitolein-, Öl-, Sorbin-, Linol-, Linolen- und Eläostearinsäure.

Ein Insektenabwehrmittel, das 75 bis 98 Gew.-% des Fettsäurealkylesters und 2 bis 25 Gew.-% des fetten Öls enthält, ist auch bevorzugt. Weiterhin ist ein Insektenabwehrmittel bevorzugt, das 8 bis 70 Gew.-% des Fettsäurealkylesters, 5 bis 90 Gew.-% des Fettalkohols und 2 bis 25 Gew.-% des fetten Öls enthält. Ein weiteres bevorzugtes Insektenabwehrmittel enthält 75 bis 98 Gew.-% des Fettsäurealkylesters und 25 bis 2 Gew.-% der freien Fettsäure oder 1 bis 97 Gew.-% des Fettsäurealkylesters, 1 bis 97 Gew.-% des Fettalkohols und 2 bis 25 Gew.-% der freien Fettsäure. Ferner umfaßt ein bevorzugtes Insektenabwehrmittel 1 bis 96 Gew.-% des Fettsäurealkylesters, 2 bis 25 Gew.-% des fetten Öls und 2 bis 25 Gew.-% der freien Fettsäure oder 1 bis 95 Gew.-% des Fettsäurealkylesters, 1 bis 95 Gew.-% des Fettalkohols und jeweils 2 bis 25 Gew.-% des fetten Öls oder der freien Fettsäure. Als natürliches pflanzliches Öl ist Rapsöl bevorzugt, das z.B. in einer Menge von 20 Gew.-% mit 80 Gew.-% eines Kokos-Vorlauf-Methylesters in dem Insektenabwehrmittel enthalten sein kann.

Die erfindungsgemäß verwendeten Fettalkohole, Fettsäurealkylester und Fettsäuren können durch einfache chemische Umsetzung aus natürlichen oder naturidentischen, toxikologisch unbedenklichen Rohstoffen, beispielsweise durch Hydrolyse, Umesterung, Hydrierung, Hochdruckhydrierung, Härtung und/oder Dehydratisierung, wie im Stand der Technik bekannt, erhalten werden. Die erfindungsgemäß verwendeten fetten Öle können ebenfalls durch herkömmliche Verfahren aus ölliefernden Rohstoffen, wie Pflanzensamen und tierischen Fetten, gewonnen werden. Demgemäß enthält das erfindungsgemäße Insektenabwehrmittel eine oder mehrere Substanzen, die aus völlig unbedenklichen synthetischen (naturidentischen) oder direkt aus natürlichen Grundstoffen hergestellt werden, und weist folglich bei hervorragender Repellentwirkung das geringste toxikologische und irritative Risiko auf. Es wird vorzugsweise durch Aufbringen auf die Haut zur Abwehr von fliegenden, stechenden und saugenden Insekten bei Menschen und Tieren eingesetzt.

Die nachstehenden Beispiele erläutern die Erfindung.

### 1. Beispiele für Insektenabwehrmittel

(I)
   - 20 Gew.-%: Rapsöl
   - 30 Gew.-%: Kokos-Methylester (8-18 C-Atome im Fettsäurerest)
   - 50 Gew.-%: Kokos-Vorlauf-Fettalkohol (C₈ bis C₁₀)
(II)
   - 10 Gew.-%: Rapsöl
   - 10 Gew.-%: Kokos-Palmkern-Vorlauf-Fettsäure (C₈ Bis C₁₂)
   - 35 Gew.-%: Kokos-Methylester (8-18 C-Atome im Fettsäurerest)
   - 45 Gew.-%: Kokos-Vorlauf-Fettalkohol (C₈ bis C₁₀)
(III)
   - 30 Gew.-%: Rapsmethylester
   - 5 Gew.-%: Sojamethylester
   - 10 Gew.-%: Sonnenblumenmethylester
   - 5 Gew.-%: Kokosmethylester
   - 30 Gew.-%: Kokos-Vorlauf-Methylester
   - 15 Gew.-%: Palmkern-Vorlauf-Alkohol
   - 5 Gew.-%: Rapsöl

### 2. Anwendungsbeispiele

Die Insektenabwehrmittel (I) und (II) wurden an zwei verschiedenen Personen getestet.

### Versuch:

Der Unterarm einer Versuchsperson wurde auf einer Fläche von ca. 250 cm² mit der entsprechenden Testsubstanz (I) oder (II) behandelt. Die Menge von 2 ml der entsprechenden Testsubstanz wurde gleichmäßig verteilt. Die behandelte Unterarmfläche wurde an beiden Enden mit einem mückendichten Klebeband und einem kurzen Plastikschlauch abgedichtet. Die unbehandelte Hand wurde mit einem dicken Handschuh überzogen und diente so gleichzeitig als Kontrolle für die Stechaktivität der Versuchstiere.

Als Versuchstiere wurden etwa 300 bis 400 Gelbfiebermücken (Aedes aegypti), fast ausschließlich Weibchen, in einem Zuchtkäfig von 40 x 40 x 40 cm eingesetzt.

Für den Test wurden der Unterarm und die Hand stündlich in den Mückenkäfig gehalten und während 10 Minuten die Zahl der Stechmücken notiert, die
(a) durch den Handschuh zu stechen versuchten (positive Kontrolle)
(b) die behandelte Fläche näher als 3 cm anflogen,
(c) auf der behandelten Fläche länger als 2 Sekunden sitzen blieben und
(d) in die behandelte Fläche einstachen und Blut saugten.

| **Testsubstanz (I)** (Testperson (1)) | | | | |
|---|---|---|---|---|
| Zeitpunkt (h) | Handschuh a) | Anfliegende b) | Absitzende c) | Stechende d) |
| 1,5 | 100 | 33 | 14 | 0 |
| 2,5 | 100 | 27 | 12 | 0 |
| 4,0 | 100 | 45 | 37 | 0 |
| 5,0 | 100 | 26 | 5 | 0 |
| 6,5 | 100 | 46 | 30 | 0 |

| **Testsubstanz (II)** (Testperson (2)) | | | | |
|---|---|---|---|---|
| Zeitpunkt (h) | Handschuh a) | Anfliegende b) | Absitzende c) | Stechende d) |
| 1 | 160 | 51 | 17 | 0 |
| 2 | 130 | 50 | 27 | 0 |
| 3 | 100 | 50 | 5 | 0 |
| 4 | 100 | - | 17 | 0 |
| 5 | 100 | 24 | 13 | 0 |
| 6 | 100 | 63 | 36 | 0 |
| 7 | 100 | 99 | 62 | 0 |

Bei den Parametern a) und b) handelt es sich um Schätzwerte, da eine exakte Bestimmung nicht möglich ist.

Die Wirksamkeit einer Substanz ergibt sich vor allem aus dem Verhältnis der auf dem Handschuh absitzenden stechlustigen Mücken zu den übrigen Werten. Die Zahl der einstechenden Mücken ist für die Dauer der Wirkung und damit in den Tropen indirekt auch für die Infektionsgefahr der entscheidende Faktor. Die getesteten Substanzen gewährleisten Schutz von über 3 Stunden. Wie aus den Parametern b) und c) ersichtlich ist, gibt es auch bei Anwendung der erfindungsgemäßen Substanzen eine gewisse Zahl anfliegender und absitzender Mücken; diese stechen jedoch nicht. Allen getesteten Substanzen kann demnach eine starke Repellentwirkung zugeschrieben werden.

## Patentansprüche

1. Insektenabwehrmittel, enthaltend als Wirkstoff mindestens einen Fettsäurealkylester mit 1 bis 4 Kohlenstoffatomen in der Alkylgruppe und mindestens einen natürlichen, naturidentischen oder synthetischen Fettalkohol und als Träger mindestens ein natürliches oder naturidentisches pflanzliches oder tierisches fettes Öl aus der Gruppe Rapsöl, Sonnenblumenöl, Erdnußöl/-butter, Sojaöl, Distelöl, Cupheaöl, Kokosöl, Palmkernöl, Palmöl und Fischtran.

2. Insektenabwehrmittel nach Anspruch 1, **dadurch gekennzeichnet**, daß es 1 bis 99 Gew.-% des Fettsäurealkylesters und 99 bis 1 Gew.-% Fettalkohols enthält.

3. Insektenabwehrmittel nach Anspruch 1, **dadurch gekennzeichnet**, daß es 75 bis 98 Gew.-% des Fettsäurealkylesters und 2 bis 25 Gew.-% des fetten Öls enthält.

4. Insektenabwehrmittel nach Anspruch 1, **dadurch gekennzeichnet**, daß es 8 bis 70 Gew.-% des Fettsäurealkylesters, 5 bis 90 Gew.-% des Fettalkohols und 2 bis 25 Gew.-% des fetten Öls enthält.

5. Insektenabwehrmittel nach einem der Ansprüche 1 bis 4, **dadurch gekennzeichnet**, daß es weiterhin als Träger mindestens eine freie Fettsäure enthält.

6. Insektenabwehrmittel nach Anspruch 5, **dadurch gekennzeichnet**, daß es 75 bis 98 Gew.-% des Fettsäurealkylesters und 25 bis 2 Gew.-% der freien Fettsäure enthält.

7. Insektenabwehrmittel nach Anspruch 5, **dadurch gekennzeichnet**, daß es 1 bis 97 Gew.-% des Fettsäurealkylesters, 1 bis 97 Gew.-% des Fettalkohols und 2 bis 25 Gew.-% der freien Fettsäure enthält.

8. Insektenabwehrmittel nach Anspruch 5, **dadurch gekennzeichnet**, daß es 1 bis 96 Gew.-% des Fettsäurealkylesters, 2 bis 25 Gew.-% des fetten Öls und 2 bis 25 Gew.-% der freien Fettsäure enthält.

9. Insektenabwehrmittel nach Anspruch 5, **dadurch gekennzeichnet**, daß es 1 bis 95 Gew.-% des Fettsäurealkylesters, 1 bis 95 Gew.-% des Fettalkohols, 2 bis 25 Gew.-% des fetten Öls und 2 bis 25 Gew.-% der freien Fettsäure enthält.

10. Insektenabwehrmittel nach einem der Ansprüche 1 bis 5, **dadurch gekennzeichnet**, daß der Fettsäurealkylester ein Methyl-, Ethyl- oder Butylester von Fettsäuren aus natürlichen oder naturidentischen pflanzlichen oder tierischen fetten Ölen aus der Gruppe Rapsöl, Sonnenblumenöl, Ernußöl/-butter, Sojaöl, Distelöl, Cupheaöl, Kokosöl, Palmkernöl, Palmöl und Fischtran ist.

11. Insektenabwehrmittel nach Anspruch 1, **dadurch gekennzeichnet**, daß die natürlichen Fettalkohole aus pflanzlichen und/oder tierischen Ölen und/oder den daraus erhältlichen Fettsäuren und/oder Fettsäurealkylestern erhältlich sind.

12. Insektenabwehrmittel nach nach Anspruch 1, **dadurch gekennzeichnet**, daß die naturidentischen und/oder synthetischen Fettalkohole aus Paraffin und/oder Ethen erhältlich sind.

13. Insektenabwehrmittel nach Anspruch 11 oder 12, **dadurch gekennzeichnet**, daß die natürlichen, naturidentischen und synthetischen Fettalkohole 5 bis 18 Kohlenstoffatome aufweisen.

14. Insektenabwehrmittel nach einem der Ansprüche 11 bis 13, **dadurch gekennzeichnet**, daß die natürlichen, naturidentischen und synthetischen Fettalkohole gesättigt sind oder 1 bis 3 ungesättigte Bindungen pro Molekül aufweisen.

15. Insektenabwehrmittel nach Anspruch 5, **dadurch gekennzeichnet**, daß die Fettsäuren durch hydrolytische Spaltung von natürlichen oder naturidentischen pflanzlichen und/oder tierischen Ölen erhältlich sind.

16. Insektenabwehrmittel nach Anspruch 15, **dadurch gekennzeichnet**, daß die Fettsäuren in der Kette 6 bis 19 Kohlenstoffatome aufweisen.

17. Verwendung des Insektenabwehrmittels nach einem der Ansprüche 1 bis 16 zur Abwehr von fliegenden, stechenden und saugenden Insekten bei Menschen und Tieren.

18. Verwendung nach Anspruch 17, **dadurch gekennzeichnet**, daß das Insektenabwehrmittel auf die Haut aufgebracht wird.

## Claims

1. Insect repellant containing at least one fatty acid alkyl ester having 1 to 4 carbon atoms in the alkyl group and at least one natural, nature-identical or synthetic fatty alcohol as the active substance and at least one natural or nature-identical vegetable or animal fatty oil from the group comprising rapeseed oil, sunflower oil, peanut oil/butter, soya oil, safflower seed oil, cuphea oil, coconut oil, palm kernel oil, palm oil and fish oil as the carrier.

2. Insect repellant according to claim 1, **characterised in that** it contains 1 to 99 wt.% of the fatty acid alkyl ester and 99 to 1 wt.% of the fatty alcohol.

3. Insect repellant according to claim 1, **characterised in that** it contains 75 to 98 wt.% of the fatty acid alkyl ester and 2 to 25 wt.% of the fatty oil.

4. Insect repellant according to claim 1, **characterised in that** it contains 8 to 70 wt.% of the fatty acid alkyl ester, 5 to 90 wt.% of the fatty alcohol and 2 to 25 wt.% of the fatty oil.

5. Insect repellant according to one of claims 1 to 4, **characterised in that** it additionally contains at least one free fatty acid as a carrier.

6. Insect repellant according to claim 5, **characterised** in that it contains 75 to 98 wt.% of the fatty acid alkyl ester and 25 to 2 wt.% of the free fatty acid.

7. Insect repellant according to claim 5, **characterised in that** it contains 1 to 97 wt.% of the fatty acid alkyl ester, 1 to 97 wt.% of the fatty alcohol and 2 to 25 wt.% of the free fatty acid.

8. Insect repellant according to claim 5, **characterised in that** it contains 1 to 96 wt.% of the fatty acid alkyl ester, 2 to 25 wt.% of the fatty oil and 2 to 25 wt.% of the free fatty acid.

9. Insect repellant according to claim 5, **characterised in that** it contains 1 to 95 wt.% of the fatty acid alkyl ester, 1 to 95 wt.% of the fatty alcohol, 2 to 25 wt.% of the fatty oil and 2 to 25 wt.% of the free fatty acid.

10. Insect repellant according to one of claims 1 to 5, **characterised in that** the fatty acid alkyl ester is a methyl, ethyl or butyl ester of fatty acids prepared from natural or nature-identical vegetable or animal fatty oils from the group comprising rapeseed oil, sunflower oil, peanut oil/butter, soya oil, safflower seed oil, Cuphea oil, coconut oil, palm kernel oil, palm oil and fish oil.

11. Insect repellant according to claim 1, **characterised in that** the natural fatty alcohols are obtainable from vegetable and/or animal oils and/or from the fatty acids and/or fatty acid alkyl esters obtainable therefrom.

12. Insect repellant according to claim 1, **characterised in that** the nature-identical and/or synthetic fatty alcohols are obtainable from paraffin and/or ethene.

13. Insect repellant according to claim 11 or 12, **characterised in that** the natural, nature-identical and synthetic fatty alcohols contain 5 to 18 carbon atoms.

14. Insect repellant according to one of claims 11 to 13, **characterised in that** the natural, nature-identical and synthetic fatty alcohols are saturated or contain 1 to 3 unsaturated bonds per molecule.

15. Insect repellant according to claim 5, **characterised in that** the fatty acids are obtainable by hydrolytic cleavage of natural or nature-identical vegetable and/or animal oils.

16. Insect repellant according to claim 15, **characterised in that** the fatty acids contain 6 to 19 carbon atoms in the chain.

17. Use of the insect repellant according to one of claims 1 to 16 to repel flying, stinging and biting-sucking insects from humans and animals.

18. Use according to claim 17, **characterised in that** the insect repellant is applied onto the skin.

## Revendications

1. Produit insectifuge, contenant en tant que substance active au moins un ester alkylique d'acide gras ayant de 1 à 4 atomes de carbone dans le groupe alkyle, et au moins un alcool gras naturel, identique à un alcool gras naturel, ou synthétique, et, en tant que support, au moins une huile grasse végétale ou animale, naturelle ou identique à une huile grasse naturelle, choisie dans le groupe de l'huile de colza, l'huile de tournesol, l'huile/le beurre d'arachide, l'huile de soja, l'huile de carthame, l'huile de cuphaea, l'huile de coprah, l'huile de palmiste, l'huile de palme et l'huile de poisson.

2. Produit insectifuge selon la revendication 1, caractérisé en ce qu'il contient de 1 à 99 % en poids de l'ester alkylique d'acide gras et de 99 à 1 % en poids d'alcool gras.

3. Produit insectifuge selon la revendication 1, caractérisé en ce qu'il contient de 75 à 98 % en poids de l'ester alkylique d'acide gras et de 2 à 25 % en poids de l'huile grasse.

4. Produit insectifuge selon la revendication 1, caractérisé en ce qu'il contient de 8 à 70 % en poids de l'ester alkylique d'acide gras, de 5 à 90 % en poids de l'alcool gras et de 2 à 25 % en poids de l'huile grasse.

5. Produit insectifuge selon l'une des revendications 1 à 4, caractérisé en ce qu'il contient en outre comme support au moins un acide gras libre.

6. Produit insectifuge selon la revendication 5, caractérisé en ce qu'il contient de 75 à 98% en poids de l'ester alkylique d'acide gras et de 25 à 2 % en poids de l'acide gras libre.

7. Produit insectifuge selon la revendication 5, caractérisé en ce qu'il contient de 1 à 97 % en poids de l'ester alkylique d'acide gras, de 1 à 97 % en poids de l'alcool gras et de 2 à 25 % en poids de l'acide gras libre.

8. Produit insectifuge selon la revendication 5, caractérisé en ce qu'il contient de 1 à 96 % en poids de l'ester alkylique d'acide gras, de 2 à 25 % en poids de l'huile grasse et de 2 à 25 % en poids de l'acide gras libre.

9. Produit insectifuge selon la revendication 5, caractérisé en ce qu'il contient de 1 à 95 % en poids de l'ester alkylique d'acide gras, de 1 à 95 % en poids de l'alcool gras, de 2 à 25% en poids de l'huile grasse et de 2 à 25 % en poids de l'acide gras libre.

10. Produit insectifuge selon l'une des revendications 1 à 5, caractérisé en ce que l'ester alkylique d'acide gras est un ester méthylique, éthylique ou butylique d'acides gras provenant d'huiles grasses végétales ou animales, naturelles ou identiques à des huiles grasses naturelles, choisies parmi l'huile de colza, l'huile de tournesol, l'huile/le beurre d'arachide, l'huile de soja, l'huile de carthame, l'huile de cuphaea, l'huile de coprah, l'huile de palmiste, l'huile de palme et l'huile de poisson.

11. Produit insectifuge selon la revendication 1, caractérisé en ce que les alcools gras naturels peuvent être obtenus à partir d'huiles végétales et/ou animales et/ou à partir des acides gras et/ou esters alkyliques d'acides gras qui peuvent être obtenus à partir de celles-ci.

12. Produit insectifuge selon la revendication 1, caractérisé en ce que les alcools gras identiques aux alcools gras naturels et/ou synthétiques peuvent être obtenus à partir de paraffine ou d'éthène.

13. Produit insectifuge selon la revendication 11 ou 12, caractérisé en ce que les alcools gras naturels, les alcools gras identiques aux alcools gras naturels et les alcools gras synthétiques ont de 5 à 18 atomes de carbone.

14. Produit insectifuge selon l'une des revendications 11 à 13, caractérisé en ce que les alcools gras naturels, les alcools gras identiques aux alcools gras naturels et les alcools gras synthétiques sont saturés ou comportent de 1 à 3 liaisons insaturées par molécule.

15. Produit insectifuge selon la revendication 5, caractérisé en ce que les acides gras peuvent être obtenus par coupure hydrolytique d'huiles végétales et/ou animales naturelles ou identiques aux huiles naturelles.

16. Produit insectifuge selon la revendication 15, caractérisé en ce que les acides gras ont de 6 à 19 atomes de carbone dans la chaîne.

17. Utilisation du produit insectifuge selon l'une des revendications 1 à 16, pour la défense contre les insectes volants, piqueurs et suçeurs chez l'homme et les animaux.

18. Utilisation selon la revendication 17, caractérisée en ce que le produit insectifuge est appliqué sur la peau.
